# EUROPÄISCHE PATENTSCHRIFT

(11) **EP 0 498 423 B1**
(45) Veröffentlichungstag und Bekanntmachung des Hinweises auf die Patenterteilung: **26.10.1994**
(21) Anmeldenummer: 92101990.7
(22) Anmeldetag: 06.02.1992
(51) Int. Cl.: F16D 65/095, B61H 5/00, F16D 65/092, F16D 65/02, F16D 55/224

(54) **Scheibenbremse für Schienenfahrzeuge**
Disc brake for rail vehicles
Frein à disque pour véhicules ferroviaires

(30) Priorität: 08.02.1991 DE 4103894
(43) Veröffentlichungstag der Anmeldung: 12.08.1992
(73) Patentinhaber: KNORR-BREMSE AG, 80710 München (DE)
(72) Erfinder: Loebner, Reinhard, W-8260 Mühldorf (DE); Wirth, Xaver, Dr., W-8045 Ismaning (DE)

(56) Entgegenhaltungen:
- EP-A- 0 268 095
- EP-A- 0 380 769
- FR-A- 1 531 556
- GB-A- 2 051 983

## Beschreibung

Die Erfindung betrifft eine Scheibenbremse nach dem Gattungsbegriff des Patentanspruches 1.

Bei Scheibenbremsen der gattungsgemäßen Art (GB-A-2051983) sind an beiden Seiten einer Bremsscheibe Bremsbeläge vorgesehen, von welchen einer mittels Buchsen auf zwei Tragbolzen geführt ist. Die Tragbolzen sind am Bremssattel fixiert und durchdringen an ihrem der Bremsscheibe zugewandten Ende je eine am Belagträgerblech des Bremsbelags angebrachte, gleichfalls in Richtung der Bremsscheibe sich erstreckende Buchse. Der Zuspannkolben der Scheibenbremse wirkt in an sich bekannter Weise auf das Belagträgerblech des Bremsbelages ein, so daß sich dieses nach Maßgabe des Bremsbelagverschleißes der Bremsscheibe nähert. Da die am Belagträgerblech angeordneten Buchsen gleichfalls in Richtung der Bremsscheibe ausgerichtet sind und mit der Bremsscheibe in Berührung gelangen, ist es erforderlich, sie aus einem verschleißfähigen Material zu fertigen, welches vorzugsweise weicher bzw. verschleißfähiger ist als das eigentliche Reibmaterial des Bremsbelages.

Ein gegenseitiger Austausch der Bremsbeläge zu beiden Seiten der Bremsscheibe ist bei Anordnungen der gattungs gemäßen Art nicht möglich. Auch ist die Führung des die Buchsen aufweisenden Bremsbelages auf den Tragbolzen nur als begrenzt ausreichend anzusehen, da die Führungslänge bei zunehmendem Verschleiß der Buchsen geringer wird.

Um zu einer möglichst guten Axialführung zu gelangen, ist es bekannt (EP-A-0 268 095), zur Befestigung der Bremsbeläge achsparallele Bolzen vorzusehen, die außerhalb des Bremsscheibenaußendurchmessers angebracht sind. Diese Art der Führung ist im allgemeinen baulich sehr aufwendig; im besonderen ist sie bei Radbremsscheiben für Schienenfahrzeuge nicht verwendbar, da außerhalb der Bremsscheiben noch der eigentliche Radkranz besteht.

Davon ausgehend besteht die Aufgabe der Erfindung darin, eine Scheibenbremse der gattungsgemäßen Art so auszugestalten, daß eine ausreichende Führung der Bremsbeläge radial innerhalb des Außendurchmessers der Bremsscheibe erfolgen kann; es soll hierdurch auch ermöglicht sein, schwimmend gelagerte Bremssättel an Radbremsscheiben für Schienenfahrzeuge vorzusehen. Aus Gründen der Kosteneinsparung soll es auch möglich sein, die Bremsbeläge zu beiden Seiten der Bremsscheibe gegenseitig auszutauschen.

Zur Lösung dieser Aufgabe dienen die Merkmale nach dem Kennzeichnungsteil des Patentanspruches 1.

Die Lagerung der Bremsbeläge zu beiden Seiten der Bremsscheibe ermöglicht den Einsatz schwimmend gelagerter Bremssättel, auch bei Verwendung an Radbremsscheiben. Die Bremsbeläge zu beiden Seiten der Bremsscheibe sind infolge ihrer Buchsenführung absolut identisch zueinander, so daß auch ein gegenseitiger Austausch der Bremsbeläge ermöglicht ist, insbesondere bei der Notwendigkeit des Ausgleichs einseitigen Verschleißes des Belagreibmaterials etc. Durch die Ausbildung der Buchsenführung an den Bremsbelägen ist es möglich, sowohl innenseitige als auch außenseitige Lagerung derselben vorzusehen, was im Bereich der Zuspannseite des Bremssattels ermöglicht, die Tragbolzen zum Zwecke des Belagwechsels zu lösen, derart, daß bei nachfolgender Verschiebung des Bremssattels ein Lösen beider Bremsbeläge und ein Einlegen neuer Bremsbeläge sichergestellt ist.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.
- Fig.1: ist eine Längsansicht eines an seinen Enden je eine Buchse aufweisenden Bremsbelages gemäß der Erfindung;
- Fig.2: ist eine Teildrauf- und Schnittansicht des Bremsbelages nach Fig.1;
- Fig.3: ist eine teilweise geschnittene Ansicht eines schwimmend gelagerten Bremssattels mit zu beiden Seiten einer Radbremsscheibe angeordneten Bremsbelägen gemäß der Erfindung.

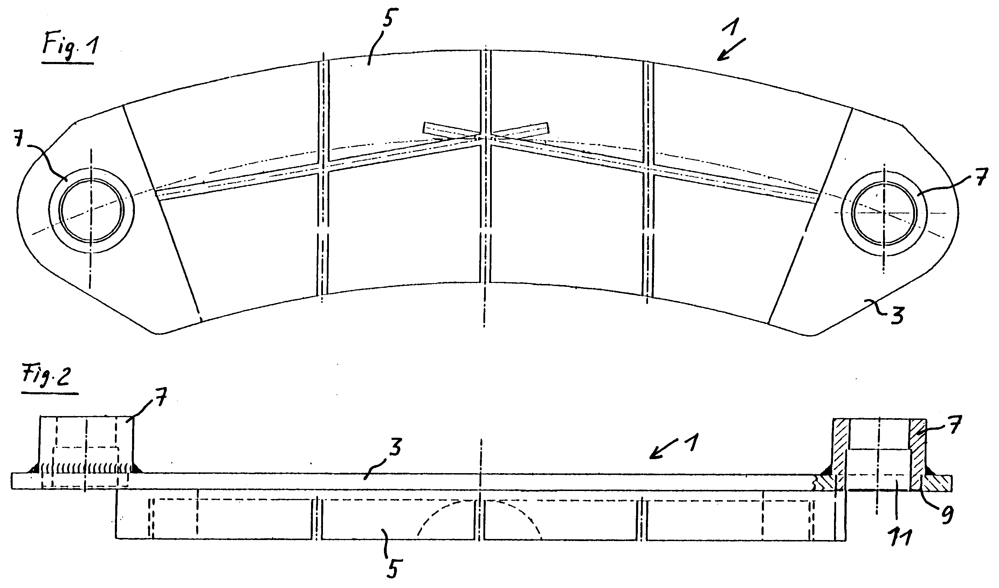

In Fig.1 der Zeichnung ist ein Bremsbelag 1 dargestellt, welcher in an sich bekannter Weise aus einem Belagträgerblech 3 und dem am Belagträgerblech 3 aufvulkanisierten oder in sonstiger Weise befestigten Reibmaterial 5 besteht. An den Enden des Belagträgerbleches 3 sind Buchsen 7 befestigt, vorzugsweise angeschweißt, wobei die Buchsen in Bohrungen 9 des Belagträgerbleches 3 eingesezt sind. Die Buchsen 7 sind mit durchgehenden Bohrungen 11 versehen.

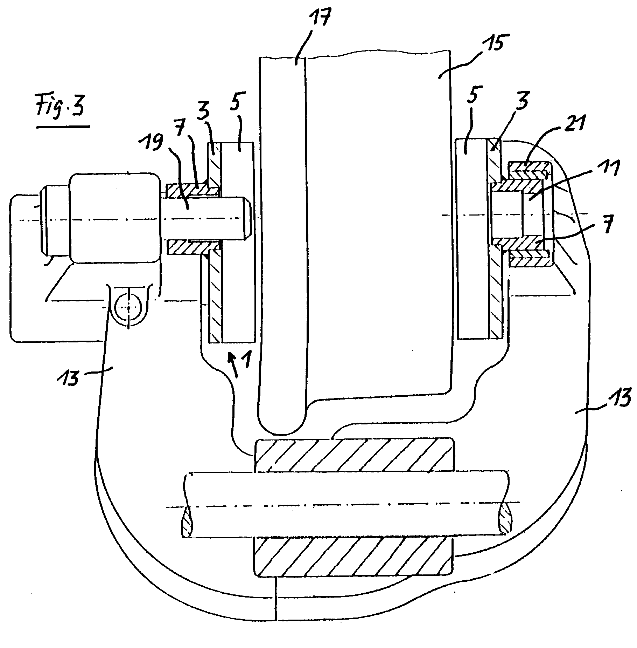

In Fig.3 der Zeichnung ist ein schwimmend gelagerter Bremssattel einer Scheibenbremse für Schienenfahrzeuge, vorzugsweise für Radbremsscheiben dargestellt. Bei einer derartigen Ausgestaltung umgreift der Bremssattel eine Radbremsscheibe 15, welche gleichzeitig als Laufrad eines Schienenfahrzeuges wirkt und demgemäß einen Spurkranz 17 trägt.

Der Bremssattel 13 trägt gemäß der Erfindung zu beiden Seiten der Radbremsscheibe 15 je einen der in Fig.1 und 2 dargestellten Bremsbeläge 1, welche mit Hilfe der Buchsen 7 gehaltert sind. An der in Fig.3 linken Seite der Radbremsscheibe 15 ist die Kolbenseite, also die den Betätigungskolben der Scheibenbremse enthaltende Seite des Bremssattels vorgesehen; in diesem Bereich ist der Bremsbelag 1, von welchem im Schnitt ein Ende wiedergegeben ist, von zwei Tragbolzen 19 geführt. Auf der Kolbenseite führt demnach der Innendurchmesser der beiden Buchsen 7, während auf der in Fig.3 rechten Seite der Außendurchmesser der Buchsen zur Führung dient. Hierbei greifen die Buchsen 7, von welchen gleichfalls eine im Schnitt wiedergegeben ist, in zugeordnete Bohrungen von Augen 21, welche am Bremssattel ausgebildet bzw. an diesem befestigt sind. Die Tragbolzen 19 für den linksseitigen Bremsbelag sind fliegend gelagert, wobei die Buchsen 7 auf den Tragbolzen 19 frei verschiebbar sind.

Die Wirkungsweise der Bremsbelaghalterung ist wie folgt:
Im eingebauten Zustand sind die beiden Bremsbeläge formschlüssig mit dem Brems- und Schiebesattel verbunden; bei Bremsbetätigung gleitet der kolbenseitige Bremsbelag unter Einwirkung des (in der Zeichnung nicht dargestellten) Zuspannkolbens axial auf den beiden Tragbolzen 19 bis zur Anlage an der Radbremsscheibe 15. Das Abbremsen geschieht in bekannter Weise durch Anpressen des Bremsbelages, wobei nach dem Schwimmsattelprinzip der Bremssattel 13 eine Gegenbewegung vollführt und der rechtsseitige Bremsbelag in gleicher Weise an die Radbremsscheibe angepreßt wird.

Nach dem Lösen der Bremse, d.h. nach dem Rückhub des Zuspannkolbens, sind beide Bremsbeläge kraftfrei; im Rahmen des sog. Lüftspiels kann der kolbenseitige Bremsbelag von der Radbremsscheibe abheben. Der gegenüberliegende Bremsbelag wird zusammen mit dem Bremssattel infolge Axialschlag der Radbremsscheibe oder infolge dynamischer Stöße von der Radbremsscheibe abgehoben.

Der Belagtausch der Bremsbeläge erfolgt in mehreren einzelnen Schritten. Zunächst ist die Arretierung der Tragbolzen 19 zu lösen. Nachfolgend werden die Tragbolzen axial verschoben, bis der kolbenseitige Bremsbelag frei wird. Nunmehr kann der Bremsbelag herausgenommen werden. Anschließend wird der (nicht dargestellte) Zuspannkolben zurückgestellt und demgemäß der Bremssattel axial verschoben, bis der Zuspannkolben linksseitig die Radbremsscheibe berührt. Infolge des sich hierbei einstellenden Freiraumes kann der gegenüberliegende Bremsbelag aus seiner Halterung in den Augen 21 herausgenommen werden. Das Einsetzen der neuen Bremsbeläge erfolgt in umgekehrter Reihenfolge.

Die erfindungsgemäße Lagerung der Bremsbeläge wurde vorstehend unter Bezugnahme auf die Verwendung an einer Radbremsscheibe erläutert; selbstverständlich kann die Halterung auch bei einer normalen Wellenbremsscheibe zur Anwendung gebracht werden, insbesondere dort, wo am Außenumfang der Bremsscheibe beengte bauliche Verhältnisse existieren. Die Bremsbeläge sind im eingebauten Zustand unverlierbar, was einen wesentlichen Vorteil im rauhen Betrieb darstellt. Es ist ein servicefreundlicher Belagtausch ermöglicht, da nur einseitig am Bremssattel verriegelt werden muß. Die erfindungsgemäße Konstruktion ist auch bevorzugt dort einsetzbar, wo eine Sattelseite unzugänglich ist.

### Bezugszeichenliste

- 1: Bremsbelag
- 3: Belagträgerblech
- 5: Reibmaterial
- 7: Buchse
- 9: Bohrung
- 11: Bohrung
- 13: Bremssattel
- 15: Radbremsscheibe
- 17: Spurkranz
- 19: Tragbolzen
- 21: Auge

## Patentansprüche

1. Scheibenbremse für Schienenfahrzeuge, mit einem die Bremsscheibe umgreifenden, schwimmend gelagerten Bremssattel (13), mittels welchem beidseitig der Bremsscheibe Bremsbeläge (1) auf diese einzuwirken vermögen, wobei auf der den Zuspannkolben der Bremsanordnung aufweisenden Seite des Bremssattels der Bremsbelag durch wenigstens zwei an ihm ausgebildete Buchsen (7) axial verschieblich an vom Bremssattel in Richtung der Bremsscheibe frei auskragenden Tragbolzen (19) verschiebbar geführt ist, gekennzeichnet durch folgende Merkmale:
a) auf der bezüglich des Zuspannkolbens entgegengesetzten Seite des Bremssattels (13) sind an diesem wenigstens zwei buchsenförmige Augen ( 21) ausgebildet, wobei der dieser Bremssattelseite zugeordnete Bremsbelag (1) in vom Reibmaterial (5) abgewandter Richtung sich erstreckende, mit dem Belagträgerblech (3) verbundene Buchsen (7) trägt, welche jeweils in den Augen (21) des Bremssattels geführt sind; und
b) die Buchsen des Bremsbelages (1), welcher sich auf der den Zuspannkolben aufweisenden Seite des Bremssattels befindet, sind gleichfalls in vom Reibmaterial abgewandter Richtung ausgerichtet und mit dem Belagträgerblech (3) verbunden, wobei die Tragbolzen (19) die Buchsen (7) relativverschieblich durchsetzen.

2. Scheibenbremse nach Anspruch 1, dadurch gekennzeichnet, daß die Tragbolzen (19) frei schwimmend im Bremssattel (13) geführt sind.

3. Scheibenbremse nach Anspruch 1 oder 2, dadurch gekennzeichnet, daß die Tragbolzen (19) zum Zwecke des Bremsbelagwechsels vom Bremssattel (13) lösbar sind.

4. Scheibenbremse nach einem der vorangehenden Ansprüche, dadurch gekennzeichnet, daß die Bremsbeläge (1) zu beiden Seiten der Bremsscheibe gegenseitig austauschbar sind.

5. Scheibenbremse nach einem der vorangehenden Ansprüche, dadurch gekennzeichnet, daß die Bremsscheibe aus einer Radbremsscheibe (15) besteht.

## Claims

1. Disc brake for rail vehicles, having a brake caliper (13) enclosing the brake disc and mounted in a floating manner, by means of which, on both sides of the brake disc, brake linings (1) are able to act on the disc, wherein on the side of the brake caliper having the clamping piston of the brake arrangement the brake lining is movably guided by at least two bushings (7) formed on it and axially movable on carrier pins (19) freely protruding from the brake caliper in the direction of the brake disc, characterised by the following features:
a) on the opposite side of the brake caliper (13) with respect to the clamping piston there are formed on it at least two bushing-shaped eyes (21), the brake lining (1) associated with this brake caliper side carrying bushings (7) extending in the direction remote from the friction material (5) and connected to the lining carrier plate (3), which are respectively guided in the eyes (21) of the brake caliper; and
b) the bushings of the brake lining (1) which is on the side of the brake caliper having the clamping piston are also directed in the direction remote from the friction material and are connected to the lining carrier plate (3), the carrier pins (19) penetrating the bushings (7) in a relatively displaceable manner.

2. Disc brake according to claim 1, characterised in that the carrier pins (19) are guided in the brake caliper (13) in a freely floating manner.

3. Disc brake according to claim 1 or 2, characterised in that the carrier pins (19) can be released from the caliper (13) for the purpose of changing the brake lining.

4. Disc brake according to one of the preceding claims, characterised in that the brake linings (1) on both sides of the brake disc are interchangeable.

5. Disc brake according to one of the preceding claims, characterised in that the brake disc consists of a wheel brake disc (15).

## Revendications

1. Frein à disque pour véhicules sur rails, comprenant un étrier de frein (13) monté flottant, qui enserre le disque de frein et au moyen duquel des garnitures de frein (1) peuvent agir sur le disque de frein, des deux côtés de ce dernier, et dans lequel sur le côté de l'étrier de frein, qui est dirigé vers le piston de serrage du dispositif de frein, la garniture de frein est guidée par au moins deux douilles (7) conformées sur celle-ci, de manière à être déplaçable axialement sur des boulons de support (19) qui font saillie librement à partir de l'étrier de frein en direction du disque de frein, caractérisé par les particularités suivantes :
a) sur le côté de l'étrier de frein (13) tourné à l'opposé du piston de serrage, au moins deux oeillets en forme de douilles (21) sont formés sur l'étrier de frein, la garniture de frein (1), qui est associée à ce côté de l'étrier de frein, portant des douilles (7) qui s'étendent dans la direction tournée à l'opposé du matériau de friction (5) et sont reliées à la tôle (3) de support de garniture et sont guidées respectivement dans les oeillets (21) de l'étrier de frein, et
b) les douilles de la garniture de frein (1) qui est située sur le côté de l'étrier de frein qui est tourné vers le piston de serrage, sont alignées également dans la direction tournée à l'opposé du matériau de friction et sont reliées à la tôle de support de garniture (3), les boulons de support (19) traversant les douilles (7) de manière à permettre un déplacement relatif.

2. Frein à disque suivant la revendication 1, caractérisé par le fait que les boulons de support (19) sont guidés de manière à être librement flottants dans l'étrier de frein (13).

3. Frein à disque suivant la revendication 1 ou 2, caractérisé par le fait que les boulons de support (19) peuvent être détachés de l'étrier de frein (13), pour permettre le remplacement de la garniture de frein.

4. Frein à disque suivant l'une des revendications précédentes, caractérisé par le fait que les garnitures de frein (1) peuvent être remplacées l'une par l'autre des deux côtés du disque de frein.

5. Frein à disque suivant l'une des revendications précédentes, caractérisé par le fait que le disque de frein est constitué par un disque de frein de roue (15).
